# EUROPEAN PATENT APPLICATION

(11) **EP 4 012 591 A1**
(43) Date of publication of application: **15.06.2022**
(21) Application number: 20850398.7
(22) Date of filing: 14.07.2020
(51) Int. Cl.: G06F 21/62, G06F 16/182, G06F 21/60, G06F 21/64

(54) **INFORMATION PROCESSING DEVICE, INFORMATION PROCESSING METHOD, AND PROGRAM**

(30) Priority: 06.08.2019 JP 2019144219
(71) Applicant: Sony Group Corporation, Tokyo 108-0075 (JP)
(72) Inventor: SHIRAI, Taizo, Tokyo 108-0075 (JP); KAMINO, Eiji, Tokyo 108-0075 (JP)
(74) Representative: MFG Patentanwälte Meyer-Wildhagen Meggle-Freund Gerhard PartG mbB
(86) International application number: PCT/JP2020/027415
(87) International publication number: WO 2021/024717

(57) **Abstract**

An information processing apparatus includes: an acquisition unit (251) that acquires first data including identification information of an electronic device from the electronic device; a generation unit (252) that generates transaction data including the first data; and an identifying unit (253) that identifies a blockchain in which the generated transaction data is to be registered among a plurality of blockchains based on a type of the generated transaction data.

## Description

### Field

The present disclosure relates to an information processing apparatus, an information processing method, and a program.

### Background

In recent years, services using blockchains have been developed. For example, Bitcoin and the like using blockchains for exchange of virtual currencies can be exemplified. The blockchains prevent tampering of registration data and the like, and can store the registration data with high reliability by a mutual monitoring effect of nodes by a plurality of business operators. Patent Literature 1 discloses a technology for verifying validity of control data to be controlled of a verification target by verifying whether the control data of the verification target is control data learned using new learning data.

### Citation List

### Patent Literature

Patent Literature 1: WO 2019/058684 A

### Summary

### Technical Problem

In the above-described conventional technology, for example, there is a demand for registering and utilizing data of Internet of Things (IoT) devices and the like in a plurality of types of blockchains such as a public type, a consortium type, and a private type.

Therefore, the present disclosure provides an information processing apparatus, an information processing method, and a program capable of securing authenticity of data registered in a plurality of types of blockchains.

### Solution to Problem

To solve the problems described above, an information processing apparatus according to the present disclosure includes: an acquisition unit that acquires first data including identification information of an electronic device from the electronic device; a generation unit that generates transaction data including the first data; and an identifying unit that identifies a blockchain in which the generated transaction data is to be registered among a plurality of blockchains based on a type of the generated transaction data.

Moreover, an information processing method according to the present disclosure, executed by a computer, includes: acquiring first data including identification information of an electronic device from the electronic device; generating transaction data including the first data; and identifying a blockchain in which the generated transaction data is to be registered among a plurality of blockchains based on a type of the generated transaction data.

Moreover, a program according to the present disclosure causes a computer to realize: acquiring first data including identification information of an electronic device from the electronic device; generating transaction data including the first data; and identifying a blockchain in which the generated transaction data is to be registered among a plurality of blockchains based on a type of the generated transaction data.

### Brief Description of Drawings

FIG. 1 is a view for describing an outline of a blockchain.
FIG. 2 is a view for describing the outline of the blockchain.
FIG. 3 is a view for describing the outline of the blockchain.
FIG. 4 is a view for describing an example of an information processing system according to a first embodiment.
FIG. 5 is a diagram illustrating configuration examples of a first electronic device and a second electronic device according to the first embodiment.
FIG. 6 is a view illustrating an example of transaction data according to the first embodiment.
FIG. 7 is a view illustrating another example of the transaction data according to the first embodiment.
FIG. 8 is a flowchart illustrating an example of a processing procedure executed by the second electronic device according to the first embodiment.
FIG. 9 is a view for describing an example of a server that manages the electronic device according to the first embodiment.
FIG. 10 is a view illustrating an example of management data of the server according to the first embodiment.
FIG. 11 is a view illustrating an example of transaction data for excluding the electronic device according to the first embodiment.
FIG. 12 is a diagram illustrating a configuration example of a verification device according to the first embodiment.
FIG. 13 is a flowchart illustrating an example of a processing procedure executed by the verification device according to the first embodiment.
FIG. 14 is a diagram illustrating configuration examples of a first electronic device and a second electronic device according to a second embodiment.
FIG. 15 is a flowchart illustrating an example of a processing procedure executed by the second electronic device according to the second embodiment.
FIG. 16 is a hardware configuration diagram illustrating an example of a computer that implements functions of an information processing apparatus.

### Description of Embodiments

Hereinafter, embodiments of the present disclosure will be described in detail with reference to the drawings. Note that the same portions are denoted by the same reference signs in each of the following embodiments, and a repetitive description thereof will be omitted.

### (First Embodiment)

### [Outline of Blockchain]

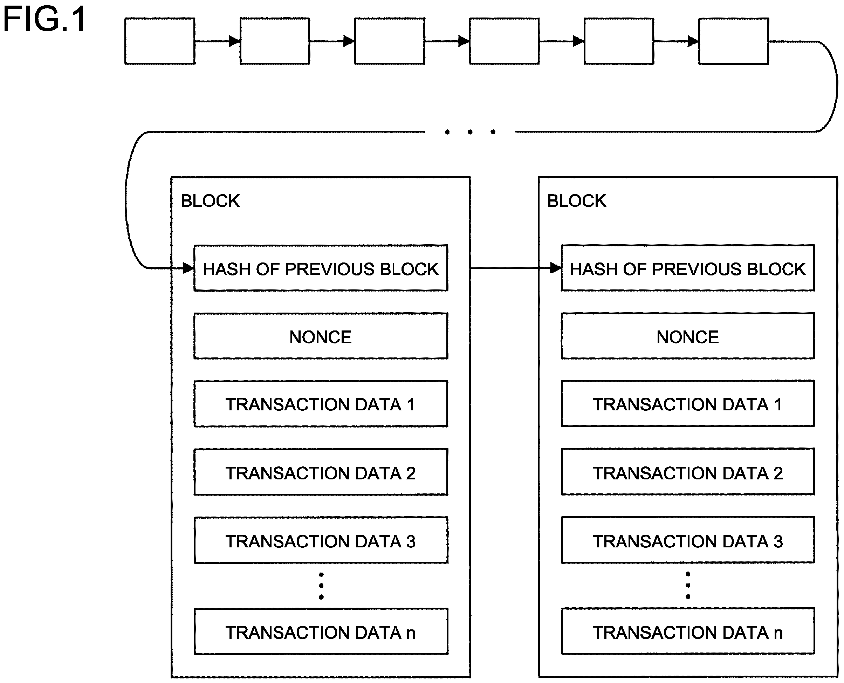

In an information processing system according to the present embodiment, a blockchain, which is a type of distributed P2P database distributed in a peer-to-peer (P2P) network, is used. The P2P network is also referred to as a peer-to-peer distributed file system. Thus, first, an outline of the blockchain will be described before describing an embodiment of the present disclosure. FIGS. 1 to 3 are views for describing the outline of the blockchain.

As illustrated in FIG. 1, the blockchain is data in which a plurality of blocks is continuously included like a chain. In each block, one or more pieces of data can be stored as transaction data (transaction data 1 to transaction data n in the drawing). Further, examples of the transaction data include various types of data such as data indicating content of a transaction, such as a value of a traded virtual currency, and data indicating an address to a public key of a participant of a peer-to-peer (P2P) network that generates the transaction.

The blockchain includes, for example, a hash of an immediately previous block and a value called a nonce. The hash of the immediately previous block is, for example, information used to determine whether a block is a "correct block" correctly continuous from the immediately previous block. The nonce is, for example, information used to prevent spoofing in authentication using a hash, and tampering is prevented by using the nonce. Examples of the nonce include data indicating a character string, a numeric string, or a combination thereof.

Further, in the blockchain, spoofing is prevented by assigning an electronic signature using an encryption key to transaction data. Further, data of each transaction is published and shared throughout all blockchain networks. Note that each piece of transaction data may be encrypted using an encryption key. Each piece of transaction data is published and shared across all P2P networks. Note that there may be a case where the same record is not necessarily held in all the P2P networks depending on a type of P2P database.

A new block is added to a blockchain in a P2P network by, for example, a technique called Proof of Work (PoW) or a technique called Proof of Stake (PoS). The PoW is the technique in which a person who has solved a mathematical problem fastest among participants of the P2P network generates a new block. Further, the PoS is, for example, a means for generating a new block fastest by a person who has solved a mathematical problem whose difficulty level changes according to an asset held by a participant determined by the amount of virtual currency, a period of holding the virtual currency, and the like. Note that a method for adding a new block to the blockchain in the P2P network according to the present embodiment is not particularly limited.

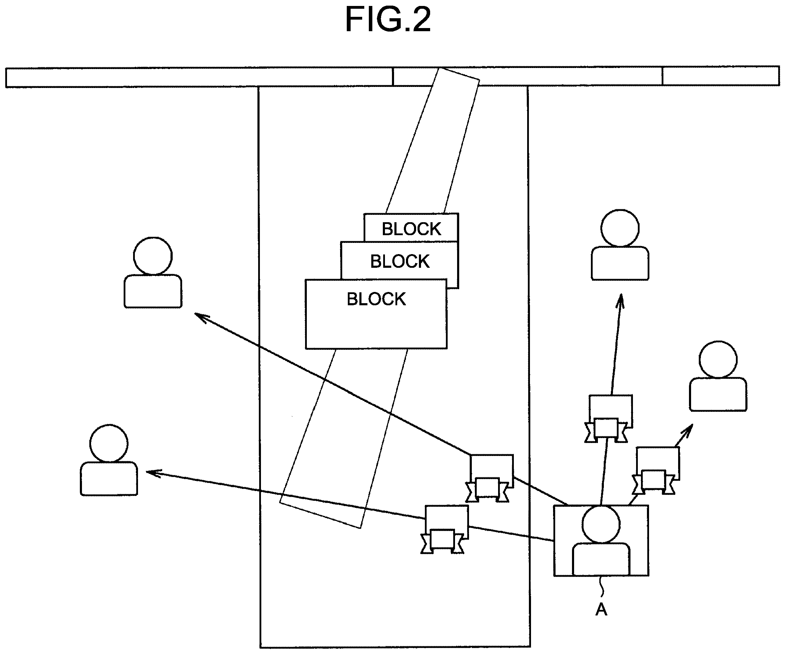

FIG. 2 is a view illustrating an example of data registration in a blockchain in a P2P network. The example illustrated in FIG. 2 illustrates a state where target data (for example, coin in Bitcoin) included in transaction data is registered by a participant A in a blockchain system. The participant A attaches an electronic signature generated using a secret key of the participant A to the target data to be registered in the blockchain. As the electronic signature is performed on the data to be registered in the blockchain using the secret key of the participant A, for example, it is ensured that the data is data attributed to the participant A, that a holder of the data is the participant A, and the like. Further, the participant A of the P2P network may encrypt data to be registered in the blockchain using a public key of participants or the like. Note that, needless to say, the electronic signature using the secret key or the encryption using the public key or the like is not necessarily performed at the time of registering data in the blockchain.

When the electronic signature is performed, the participant A broadcasts transaction data including the data to which the electronic signature has been attached, on the P2P network. This ensures that the holder of the data to which the electronic signature has been attached is the participant A. Then, the transaction data broadcast on the P2P network is registered in the blockchain by being included in a block created by any participant of the P2P network.

Note that a method for registering data in the blockchain in the P2P network is not limited to the method described above. For example, it is also possible to register data in a blockchain using a sidechain technology in the P2P network.

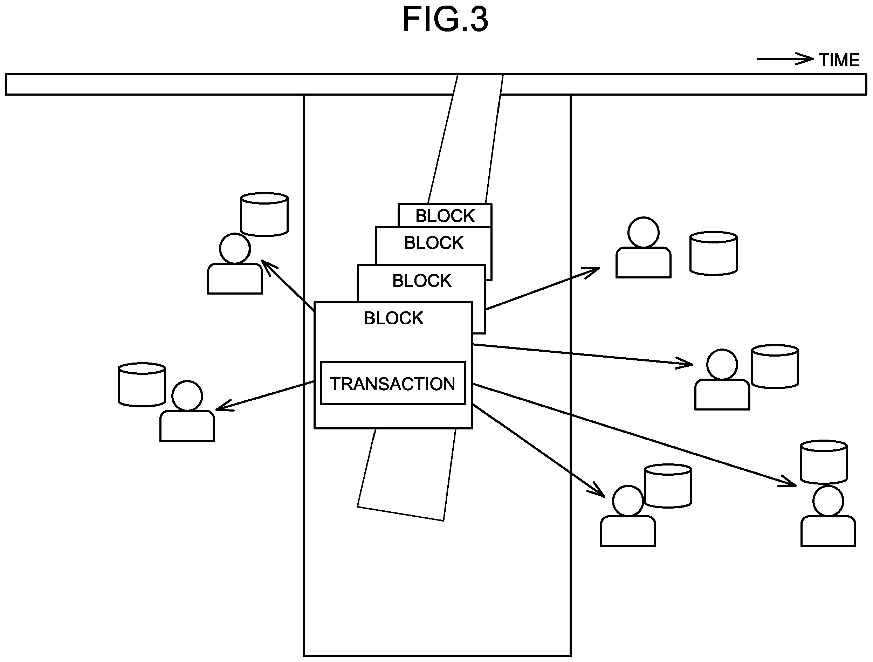

FIG. 3 is a view illustrating an example of data acquisition from a blockchain in a P2P network. The example illustrated in FIG. 3 illustrates an example of acquisition of data from the blockchain. Each of participants of the P2P network can acquire data, registered in blockchain data by a participant of the P2P network and stored in the blockchain, for example, by referring to the blockchain data stored in a recording medium corresponding to each of the participants.

Note that there may be a case where the same record is not necessarily held in all P2P networks depending on a type of blockchain. The data registered in the blockchain by the participant of the P2P network is shared by some of the participants of the P2P network, and some of the participants can acquire the registered data by referring to the blockchain stored in the corresponding recording medium.

Further, for example, in a case where data registered in the blockchain is electronically signed using a secret key, a participant who has acquired the registered data can verify the validity of the registered data, which has been acquired, by using a public key corresponding to the secret key. Further, for example, in a case where data registered in the blockchain is encrypted using a public key, a participant who has acquired the registered data decrypts the registered data, which has been acquired, by using a secret key corresponding to the public key.

### [Outline of Information Processing System According to First Embodiment]

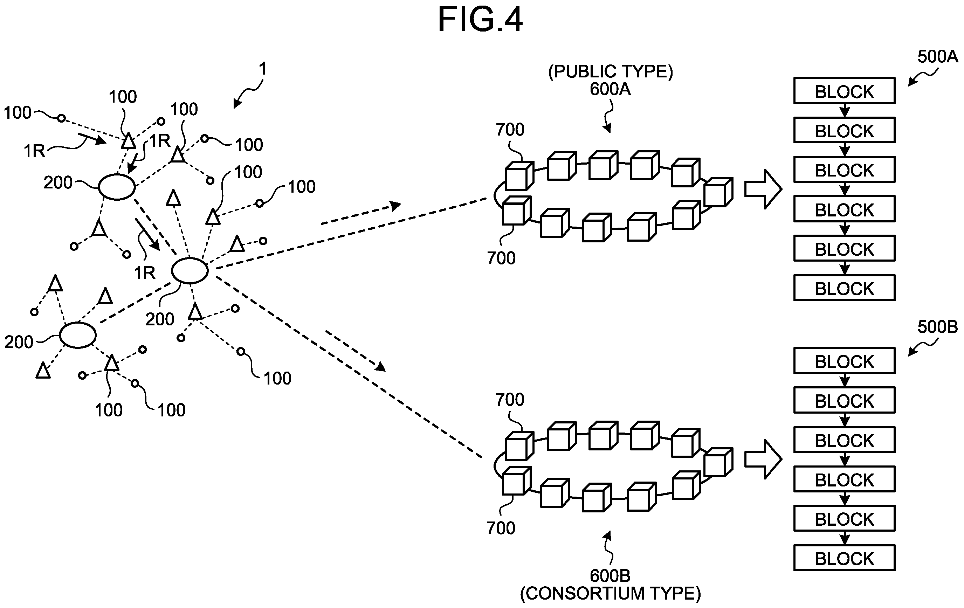

FIG. 4 is a view for describing an example of the information processing system according to the first embodiment. As illustrated in FIG. 4, an information processing system 1 includes a first electronic device 100 and a second electronic device 200. Although a case where the information processing system 1 includes a plurality of the first electronic devices 100 and a plurality of the second electronic devices 200 will be described in the present embodiment, the present invention is not limited thereto. The information processing system 1 can appropriately change the combination and number of the first electronic devices 100 and the second electronic devices 200. In the present embodiment, the second electronic device 200 is an example of an information processing apparatus. For example, as indicated by arrows 1R, routes for transferring data are preset for the first electronic devices 100 and the second electronic devices 200, and a plurality of routes including a detour route and the like can be set.

Examples of the first electronic device 100 include an IoT device that does not have a function of requesting node devices 700 to register transaction data. Examples of the second electronic device 200 include an IoT device that has a function of requesting the node devices 700 to register transaction data. As the IoT device, for example, a sensor, a washing machine, a drying machine, a dryer, a microwave oven, a dishwasher, a refrigerator, an oven, a rice cooker, a cooking appliance, a gas appliance, a fire alarm, a thermostat, an air conditioner, a set top box, a video player, a video recorder, an audio device, a lighting device, a water heater, an electric kettle, a vacuum cleaner, a fan, an air purifier, a security camera, a lock, a door/shutter opening/closing device, a sprinkler, a toilet, a thermometer, a scale, a sphygmomanometer, or the like may be used.

The first electronic device 100 and the second electronic device 200 are configured to be capable of communicating via a network or directly communicating without the network, for example. The first electronic device 100 exchanges data with at least one of another first electronic device 100 and the second electronic device 200 set in advance. The second electronic device 200 exchanges data with at least one of the first electronic device 100 and another second electronic device 200 set in advance. The second electronic device 200 has a function of exchanging data with the node devices 700 of a blockchain network 600A and a blockchain network 600B.

The blockchain network 600A holds a first blockchain 500A of a public type and includes a plurality of the node devices 700. The first blockchain 500A of the public type is a blockchain in which a management entity does not exist. The blockchain network 600B holds a second blockchain 500B of a consortium type and includes a plurality of the node devices 700. The second blockchain 500B of the consortium type is a blockchain in which a management entity exists. The blockchain network 600B has higher processing capability than the blockchain network 600A.

Although a case where a preset second electronic device 200 transmits data to the node devices 700 of the blockchain network 600A and the blockchain network 600B in the present embodiment will be described, but the information processing system 1 is not limited thereto. For example, the information processing system 1 may be configured such that each of the plurality of second electronic devices 200 transmits data to the node devices 700.

In the present embodiment, a case where the information processing system 1 switches a data registration destination to the single first blockchain 500A and the single second blockchain 500B will be described, but the number and type of blockchains are not limited. The first blockchain 500A and the second blockchain 500B may have a one-to-many relationship. For example, the information processing system 1 may register data in a plurality of first blockchains 500A and second blockchains 500B. Further, the information processing system 1 may have a function of registering data in a blockchain of a private type.

The node device 700 executes various processes such as block generation and blockchain sharing. The node device 700 includes, for example, a communication unit realized by a network interface card (NIC), a communication circuit, or the like. The node device 700 is connected to a network in a wired or wireless manner, and transmits and receives information to and from another device such as the second electronic device 200 via the network. Each of the node devices 700 communicates information on a blockchain with another node device 700. The node device 700 communicates with a terminal device 800 or the like using data of a block.

The node device 700 includes, for example, a control unit realized by a central processing unit (CPU), a micro processing unit (MPU), or the like, and executes various types of information processing. The node device 700 includes, for example, a storage unit realized by a semiconductor memory element such as a random access memory (RAM) and a flash memory, or a storage device such as a hard disk and an optical disk. Each of the node devices 700 stores the blockchain in the storage unit.

The node device 700 extracts corresponding information and transmits the extracted information to a request source in response to a request from an external electronic device. For example, when receiving designation information for designating information from an external electronic device, the node device 700 extracts corresponding information from the blockchain stored in the storage unit and transmits the extracted information to the request source. Note that the blockchain network 600A and the blockchain network 600B may include a providing device that performs various processes such as acquisition of corresponding information from the node device 700 in response to a request from an external device and transmission of the information to the request source.

### [Configuration Example of Information Processing System According to First Embodiment]

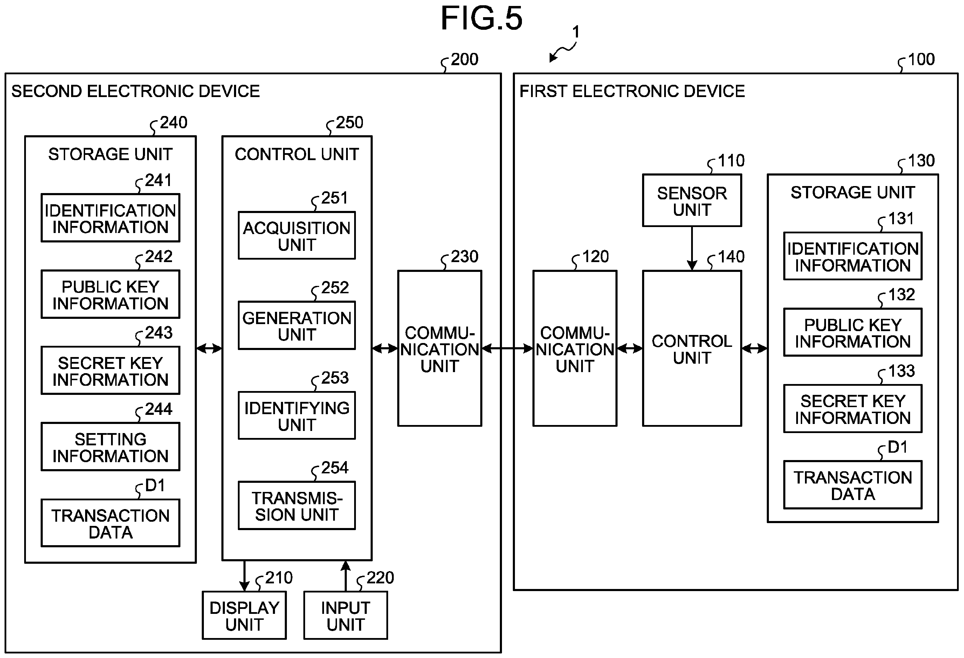

Next, an example of a configuration of the information processing system 1 according to the first embodiment will be described. FIG. 5 is a diagram illustrating configuration examples of the first electronic device 100 and the second electronic device 200 according to the first embodiment.

### [Configuration of First Electronic Device]

As illustrated in FIG. 5, the first electronic device 100 includes a sensor unit 110, a communication unit 120, a storage unit 130, and a control unit 140. The control unit 140 is electrically connected to the sensor unit 110, the communication unit 120, and the storage unit 130.

The sensor unit 110 includes various sensors, a camera, a microphone, and the like that detect target information. Examples of the various sensors include a temperature sensor, a humidity sensor, a gyro sensor, an acceleration sensor, an ultrasonic sensor, a radar, a light detection and ranging or laser imaging detection and ranging (LiDAR), a sonar, a geomagnetic sensor, an illuminance sensor, an atmospheric pressure sensor, and the like. The sensor unit 110 detects information on an acceleration, an angular velocity, a direction, an illuminance, a temperature, an atmospheric pressure, and the like applied to a device. For example, in a case where a device including the sensors is carried or worn by a user, the above-described various sensors can detect various types of information as information regarding the user, for example, information indicating a motion, an orientation, or the like of the user. The sensor unit 110 detects an image or a voice in the vicinity of a user or a device as information by the camera, the microphone, the above-described various sensors, or the like. Further, the various sensors may also include sensors that detect biometric information of a user, such as a pulse, perspiration, a brain wave, a tactile sense, an olfactory sense, and a taste sense. The sensor unit 110 may include a processing circuit or the like that analyzes information detected by the sensors and/or data of the image or voice detected by the camera or the microphone which will be described later. The sensor unit 110 supplies the detected information to the control unit 140 and the like as sensor information.

Further, the sensor unit 110 may include a position detection means for detecting an indoor or outdoor position. Specifically, the position detection means includes a global navigation satellite system (GNSS) receiver, for example, a global positioning system (GPS) receiver, a global navigation satellite system (GLONASS) receiver, a BeiDou navigation satellite system (BDS) receiver, and/or a communication device. The communication device detects a position by utilizing a technology, for example, Wi-Fi (registered trademark), Multi-Input Multi-Output (MIMO), cellular communication (e.g., position detection using a mobile base station, femtocell), near-field communication (for example, Bluetooth (registered trademark) Low Energy (BLE), Bluetooth (registered trademark)), or Low Power Wide Area (LPWA).

Further, in a case where the sensor unit 110 as described above detects a position and a situation (including biometric information) of a user, the first electronic device 100 including the sensor unit 110 is carried or worn by the user, for example. Alternatively, even in a case where the first electronic device 100 including the sensor unit 110 is installed in a living environment of a user, the sensor unit 110 can detect a position and a situation (including biometric information) of the user. For example, the sensor unit 110 can detect a situation of a user by analyzing an image including the user's face acquired by a camera fixedly installed indoors or the like.

Further, the sensor unit 110 may include a processor or a processing circuit that converts a signal or data acquired by the sensors and the like into a predetermined format. The conversion into the predetermined format includes, for example, conversion of an analog signal into a digital signal and encoding of data of an image or a voice.

The communication unit 120 has a function of performing information communication with another electronic device via a network. Specifically, the communication unit 120 transmits the sensor information detected by the sensor unit 110 to another electronic device. The communication unit 120 outputs information received from another electronic device to the control unit 140.

Further, the communication unit 120 can receive information from an external service or the like. The information acquired from the external service includes information acquired by the above-described various sensors. Examples of the information acquired from the external service include an acceleration, an angular velocity, a direction, an altitude, an illuminance, a temperature, an atmospheric pressure, a pulse, perspiration, a brain wave, a tactile sense, an olfactory sense, a taste sense, other biometric information, an emotion, position information, and the like. The information acquired from the external service may include, for example, information generated by being detected by a sensor included in a system outside the first electronic device 100 that cooperates with the external service and being posted to the external service. The communication unit 120 outputs the information received from the external service or the like to the control unit 140. Note that the communication unit 120 may be included in the configuration of the sensor unit 110, for example.

The storage unit 130 stores various types of data and programs. For example, the storage unit 130 is a semiconductor memory element such as a random access memory (RAM) and a flash memory, a hard disk, an optical disk, or the like. The storage unit 130 stores information received from another electronic device. The storage unit 130 stores, for example, various types of information such as identification information 131, public key information 132, and secret key information 133. The identification information 131 includes, for example, information for identifying the first electronic device 100. The identification information 131 is associated with device information on the first electronic device 100. The public key information 132 is, for example, information indicating a public key for signature generation. The secret key information 133 includes, for example, information indicating a secret key. The identification information 131, the public key information 132, and the secret key information 133 may be stored, for example, at the time of shipment of the first electronic device 100, or may store information generated by the first electronic device 100. Note that, in a case where the first electronic device 100 generates the information, the first electronic device 100 outputs the generated information to a manufacturer, an administrator, or the like.

The control unit 140 is, for example, a dedicated or general-purpose computer. The control unit 140 creates signature information of the first electronic device 100 based on the public key information 132 and the secret key information 133. The control unit 140 performs control to generate transaction data D1 including the sensor information detected by the sensor unit 110, the identification information 131, and the signature information, and transmit the transaction data D1 to another electronic device. The control unit 140 executes processing requested from another electronic device. For example, the control unit 140 performs control to transmit various types of information to an electronic device for which transmission has been requested, a preset electronic device, or the like via the communication unit 120. In the present embodiment, the control unit 140 transmits the transaction data D1 to the predetermined second electronic device 200. Note that the transaction data D1 of the first electronic device 100 is an example of first data.

### [Configuration of Second Electronic Device]

Next, an example of a configuration of the second electronic device 200 will be described. As illustrated in FIG. 5, the second electronic device 200 includes a display unit 210, an input unit 220, a communication unit 230, a storage unit 240, and a control unit 250. The control unit 250 is electrically connected to the display unit 210, the input unit 220, the communication unit 230, and the storage unit 240.

The display unit 210 has a function of displaying various types of information. The display unit 210 is controlled by the control unit 250. The display unit 210 includes, for example, a display device that displays various types of information. Examples of the display device include a liquid crystal display (LCD) device, an organic light emitting diode (OLED) device, a touch panel, and the like. Further, the display unit 210 according to the present embodiment may output information or the like by a projection function.

The input unit 220 includes an input device that allows an operator or the like to perform input and selection. Examples of the input device include a keyboard, a mouse, and the like. The input unit 220 may include, for example, a microphone configured to collect a voice of the operator or the like. The input unit 220 outputs input information to the control unit 250.

The communication unit 230 has a function of performing information communication with an external electronic device or the like via a network. Specifically, the communication unit 230 transmits information to a transmission destination instructed by the control unit 250. The communication unit 230 outputs information received from an external electronic device to the control unit 250.

The storage unit 240 stores various types of data and programs. For example, the storage unit 240 is, for example, a semiconductor memory element such as a RAM and a flash memory, a hard disk, an optical disk, or the like. The storage unit 240 stores, for example, various types of information such as identification information 241, public key information 242, secret key information 243, and setting information 244. The identification information 241 includes, for example, information for identifying the second electronic device 200. The identification information 241 is associated with device information on the second electronic device 200. The device information includes, for example, a valid period, state information, and the like of the second electronic device 200. The state information includes, for example, maintenance information, fault information, and the like of the second electronic device 200.

The public key information 242 is, for example, information indicating a public key for signature generation. The secret key information 243 includes, for example, information indicating a secret key. The identification information 241, the public key information 242, and the secret key information 243 may be stored, for example, at the time of shipment of the second electronic device 200, or may store information generated by the second electronic device 200. Note that, in a case where the second electronic device 200 generates the information, the second electronic device 200 outputs the generated information to a manufacturer, an administrator, or the like.

The setting information 244 includes, for example, information set by a manufacturer, a user, or the like of the second electronic device 200. The setting information 244 includes, for example, information that can identify a blockchain in which data is recorded. The setting information 244 includes, for example, information indicating whether a host device is a relay device. For example, when the setting information 244 indicates that the host device is the relay device, the second electronic device 200 functions as the relay device that transfers data to another second electronic device 200. For example, in a case where the setting information 244 indicates that the host device is not the relay device, the second electronic device 200 functions as a transmission device that transmits data to the node device 700.

The storage unit 240 further stores, for example, transaction data D1. The transaction data D1 is the transaction data described above. The storage unit 240 stores the transaction data D1 generated by the host device and the transaction data D1 generated by another electronic device. Note that an example of the transaction data D1 will be described later.

The control unit 250 is, for example, a dedicated or general-purpose computer. The control unit 250 controls an operation of the second electronic device 200. The control unit 250 includes an acquisition unit 251, a generation unit 252, an identifying unit 253, and a transmission unit 254. Each functional unit of the acquisition unit 251, the generation unit 252, the identifying unit 253, and the transmission unit 254 is realized by, for example, a CPU, an MPU, or the like. Further, each functional unit may be realized by, for example, an integrated circuit such as an application-specific integrated circuit (ASIC) and a field-programmable gate array (FPGA).

The acquisition unit 251 acquires the first data including identification information and signature information from at least one of the first electronic device 100 and the second electronic device 200. For example, the acquisition unit 251 acquires the first data at a timing when the transaction data D1 is generated or a certain period of time elapses. As the first data, for example, transaction data generated by another electronic device, data including a detection result of the sensor unit 110 and identification information, and the like are acquired. The acquisition unit 251 supplies the acquired first data to the generation unit 252.

The generation unit 252 generates the transaction data D1 including the first data. The generation unit 252 generates anonymized transaction data D1 based on, for example, the transaction data D1, the identification information 241 of the host device, the public key information 242, and the secret key information 243. The generation unit 252 generates the transaction data D1 including the identification information 241 of the host device. The generation unit 252 has a function of generating the transaction data D1 including information capable of identifying a blockchain in which data of the setting information 244 is to be recorded in a case where the second electronic device 200 is an electronic device on a transfer route of the information processing system 1. The transfer route is, for example, a route determined in advance for transferring data in the information processing system 1. The generation unit 252 supplies the generated transaction data D1 to the identifying unit 253.

For example, the generation unit 252 has a function of generating the transaction data D1 including the received transaction data D1 and the identification information 241 of the host device each time the transaction data D1 is received from the first electronic device 100 or the like. As a result, the second electronic device 200 can generate the transaction data D1 of the host device each time the transaction data D1 is received from the first electronic device 100.

For example, the generation unit 252 has a function of generating the transaction data D1 of the host device including a plurality of pieces of transaction data D1 received from the first electronic device 100 or the like. As a result, the second electronic device 200 can generate the transaction data D1 collectively including pieces of data of the plurality of first electronic devices 100 or the like.

For example, the generation unit 252 has a function of generating the transaction data D1 of the host device without including transaction data D1 whose data does not change among pieces of transaction data D1 received from the first electronic device 100 or the like within a certain period of time. As a result, the second electronic device 200 can generate the transaction data D1 obtained by thinning out a plurality of pieces of transaction data D1 to reduce the amount of data.

For example, in a case where the transaction data D1 received from the first electronic device 100 or the like includes measurement data, the generation unit 252 has a function of fitting the measurement data within a certain period of time to an approximate function and generating the transaction data D1 of the host device including parameter information for reproducing the function. As a result, even if the second electronic device 200 receives the plurality of pieces of transaction data D1 from the first electronic device 100 or the like, the transaction data D1 generated by the host device can be reduced.

For example, the generation unit 252 stores a data main body of the transaction data D1 received from the first electronic device 100 or the like in a data file (storage destination) indicated by a uniform resource locator (URL). The generation unit 252 has a function of generating the transaction data D1 of the host device including a hash value of the data main body. As a result, even if the second electronic device 200 receives the plurality of pieces of transaction data D1 from the first electronic device 100 or the like, the data amount of the transaction data D1 generated by the host device can be reduced.

The identifying unit 253 identifies a blockchain in which the generated transaction data D1 is to be registered among a plurality of blockchains based on a type of the generated transaction data D1. Examples of the type of the transaction data D1 include whether another transaction data D1 is included, whether privacy protection of the transaction data D1 or target data included in the transaction data D1 is necessary, a data type and a data structure of the transaction data D1, or a type combining these. Further, information indicating the type of the transaction data D1 may be included in the transaction data D1. The identifying unit 253 supplies the identified result to the transmission unit 254.

For example, in a case where the transaction data D1 is data having no confidentiality, the identifying unit 253 identifies the first blockchain 500A of the public type. For example, in a case where the transaction data D1 is data having confidentiality, the identifying unit 253 identifies the second blockchain 500B of the consortium type. In a case where the transaction data D1 includes the transaction data D1 of another electronic device, the identifying unit 253 identifies the second blockchain 500B.

For example, there is a case where the transaction data D1 includes information with a possibility that an individual can be identified. Therefore, in a case where the transaction data D1 is anonymized, the identifying unit 253 identifies a blockchain in which this transaction data D1 is to be registered as at least one of the first blockchain 500A and the second blockchain 500B. In a case where the transaction data D1 is not anonymized, the identifying unit 253 identifies the blockchain in which this transaction data D1 is to be registered as the second blockchain 500B. In a case where the transaction data D1 includes data of compression formation or a part of data of another electronic device, the identifying unit 253 identifies the blockchain in which the transaction data D1 is to be registered as the first blockchain 500A. As a result, the identifying unit 253 can also register the transaction data D1 that has failed to be identified due to data bias, for example, in the blockchain.

In a case where information indicating a blockchain for registration is included in the transaction data D1, the identifying unit 253 identifies the blockchain indicated by the information. In a case where there is a discrepancy in the information indicating the blockchain for registration, the identifying unit 253 identifies a blockchain in which the transaction data D1 is to be register based on a preset priority. For example, it is assumed that the setting information 244 described above includes information indicating a priority set for each of a plurality of blockchains. For example, it is assumed that a blockchain set in the transaction data D1 of the host device is different from a blockchain set in the transaction data D1 generated by another electronic device. In this case, the identifying unit 253 identifies a blockchain with a higher priority of the setting information 244. Note that the identifying unit 253 may discard the transaction data D1 in a case where there is a discrepancy in the information indicating the blockchain for registration.

The transmission unit 254 transmits the transaction data D1 to the node device 700 of the blockchain identified by the identifying unit 253. For example, the transmission unit 254 transmits the transaction data D1 to the node device 700 via the communication unit 230. The transmission unit 254 transmits (transfers) the transaction data D1 generated by the generation unit 252 to another electronic device on a transfer route in the information processing system 1.

For example, when the plurality of second electronic devices 200 transmits the transaction data D1 at the same timing, transmission and reception of data are likely to be concentrated. Therefore, the transmission unit 254 can transmit the transaction data D1 at a unique timing different from those of other electronic devices. For example, the transmission unit 254 transmits the transaction data D1 at a different timing set for each of the plurality of second electronic devices 200. Examples of the different timing include a timing shifted by a predetermined interval, a unique timing determined based on a random number or the like. For example, the plurality of second electronic devices 200 may be adjusted such that the number of second electronic devices 200 transmitting at zero second every minute and the number of second electronic devices 200 transmitting at one second every minute in the information processing system 1 are the same or do not exceed a set number. For example, the plurality of second electronic devices 200 may determine timings unique to the own devices based on random numbers to distribute transmission timings of the respective second electronic devices 200 in the information processing system 1. As described above, the second electronic device 200 can distribute the transmission timing from other electronic devices in the information processing system 1.

The functional configuration examples of the first electronic device 100 and the second electronic device 200 according to the present embodiment have been described above. Note that the above configurations described with reference to FIG. 5 are merely examples, and the functional configurations of the first electronic device 100 and the second electronic device 200 according to the present embodiment are not limited to such examples. The functional configuration of the second electronic device 200 according to the present embodiment can be flexibly modified in accordance with specifications and operations.

### [Configuration Example of Transaction Data According to First Embodiment]

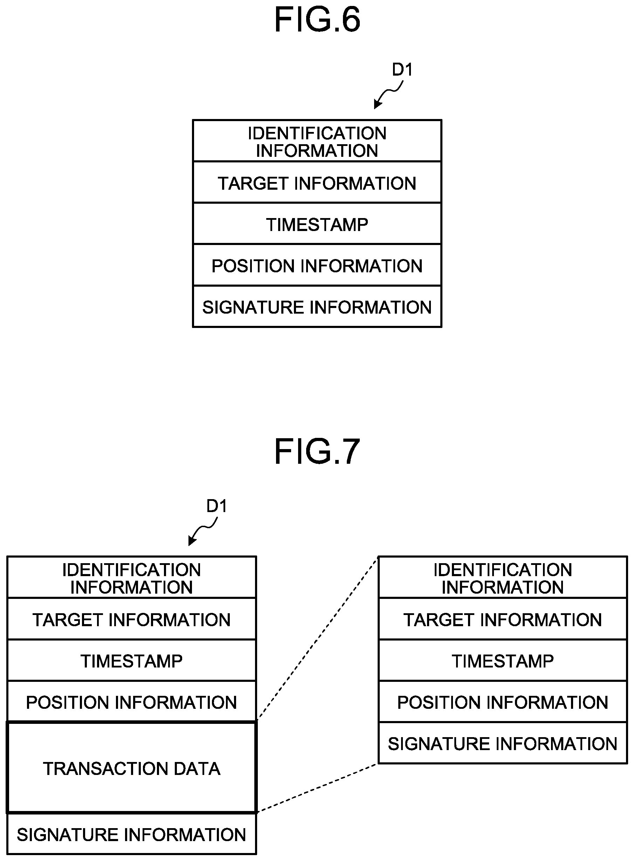

FIG. 6 is a view illustrating an example of the transaction data D1 according to the first embodiment. FIG. 7 is a view illustrating another example of the transaction data D1 according to the first embodiment.

As illustrated in FIG. 6, the transaction data D1 includes items such as identification information, target information, a timestamp, position information, and signature information. As the item of the identification information, for example, identification information of an electronic device that has generated the transaction data D1 is set. As the item of the target information, for example, information regarding an electronic device to be registered in a blockchain is set. The item of the target information includes, for example, information detected by the sensor unit 110, information acquired from a subordinate electronic device, and the like. As the item of the timestamp, for example, information such as date and time associated with the target information is set. As the item of the position information, for example, position information of an electronic device associated with the target information is set. As the item of the signature information, for example, information regarding a signature generated based on a public key and a secret key is set.

The transaction data D1 illustrated in FIG. 7 is data obtained by encapsulating the transaction data D1 illustrated in FIG. 6. The transaction data D1 includes transaction data D1 acquired from a subordinate electronic device. In a case where there is a plurality of subordinate electronic devices, the transaction data D1 includes a plurality of pieces of transaction data D1. The transaction data D1 may include a plurality of pieces of transaction data D1 in an order according to a transfer route of the information processing system 1. Further, in the transaction data D1, the included transaction data D1 may include another transaction data D1. As a result, the transaction data D1 can confirm a transfer route of an electronic device by analyzing an inclusion state of the transaction data D1.

### [Processing Procedure of Second Electronic Device According to First Embodiment]

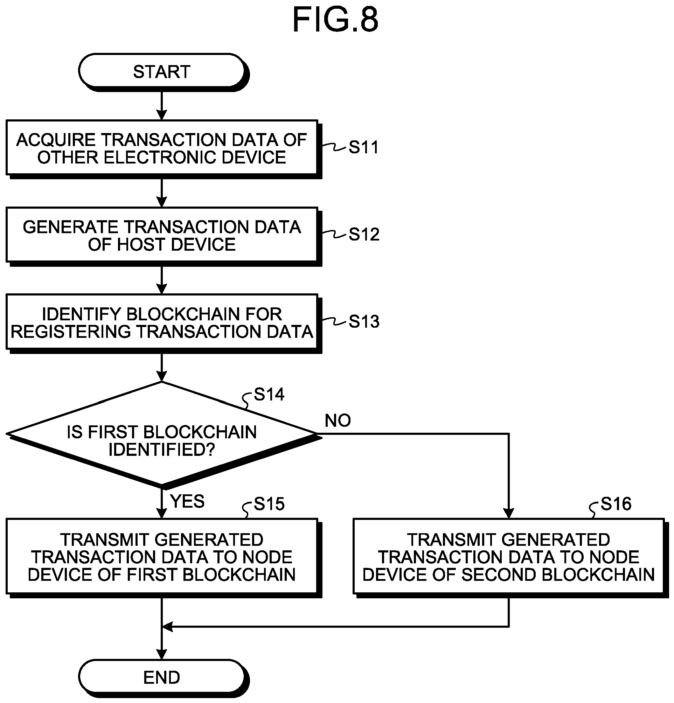

Next, an example of a processing procedure of the second electronic device 200 according to the first embodiment will be described with reference to FIG. 8. FIG. 8 is a flowchart illustrating the example of the processing procedure executed by the second electronic device 200 according to the first embodiment. The processing procedure illustrated in FIG. 8 is implemented as the control unit 250 of the second electronic device 200 executes a program. The processing procedure illustrated in FIG. 8 is repeatedly executed by the control unit 250.

As illustrated in FIG. 8, the control unit 250 of the second electronic device 200 acquires transaction data D1 of another electronic device (Step S11). For example, the control unit 250 acquires transaction data D1 acquired from another electronic device via the communication unit 230 or stored in the storage unit 240. For example, the control unit 250 may acquire transaction data D1 input from the input unit 220. When the process in Step S11 ends, the control unit 250 advances the processing to Step S12.

The control unit 250 generates transaction data D1 of the host device (Step S12). For example, when the transaction data D1 is acquired in Step S11, the control unit 250 generates transaction data D1 including the transaction data D1 and including the identification information 241 of the host device and target information. For example, when the transaction data D1 is not acquired in Step S11, the control unit 250 generates transaction data D1 including only the identification information 241 of the host device and the target information. After storing the generated transaction data D1 in the storage unit 240, the control unit 250 advances the processing to Step S13.

The control unit 250 identifies a blockchain in which the transaction data D1 is to be registered (Step S13). For example, the control unit 250 identifies the blockchain in which the transaction data D1 is to be registered based on a type of the transaction data D1. For example, the control unit 250 analyzes the transaction data D1 and estimates the type of the transaction data D1 based on an analysis result. In the present embodiment, the control unit 250 identifies the first blockchain 500A or the second blockchain 500B. After storing an identification result in the storage unit 240, the control unit 250 advances the processing to Step S14.

The control unit 250 determines whether the first blockchain 500A has been identified based on the identification result of Step S13 (Step S14). When determining that the first blockchain 500A has been identified (Yes in Step S14), the control unit 250 advances the processing to Step S15. The control unit 250 transmits the generated transaction data D1 to the node device 700 of the first blockchain 500A (Step S15). For example, the control unit 250 performs control to transmit the transaction data D1 to the node device 700 of the first blockchain 500A via the communication unit 230. As a result, when receiving the transaction data D1 from the second electronic device 200, the node device 700 generates a block including the transaction data D1 and registers the block in the first blockchain 500A. Then, when the process of Step S15 ends, the control unit 250 ends the processing procedure illustrated in FIG. 8.

Further, when determining that the first blockchain 500A has not been identified (No in Step S14), the control unit 250 advances the processing to Step S16. The control unit 250 transmits the generated transaction data D1 to the node device 700 of the second blockchain 500B (Step S16). For example, the control unit 250 performs control to transmit the transaction data D1 to the node device 700 of the second blockchain 500B via the communication unit 230. As a result, when receiving the transaction data D1 from the second electronic device 200, the node device 700 generates a block including the transaction data D1 and registers the block in the second blockchain 500B. Then, when the process of Step S16 ends, the control unit 250 ends the processing procedure illustrated in FIG. 8.

In the example of the processing procedure illustrated in FIG. 8, the control unit 250 of the second electronic device 200 functions as the acquisition unit 251 described above by executing the process of Step S11. The control unit 250 functions as the generation unit 252 described above by executing the process of Step S12. The control unit 250 functions as the identifying unit 253 described above by executing Step S13. The control unit 250 functions as the transmission unit 254 described above by executing Step S15 and Step S16.

### [Configuration Example of Server According to First Embodiment]

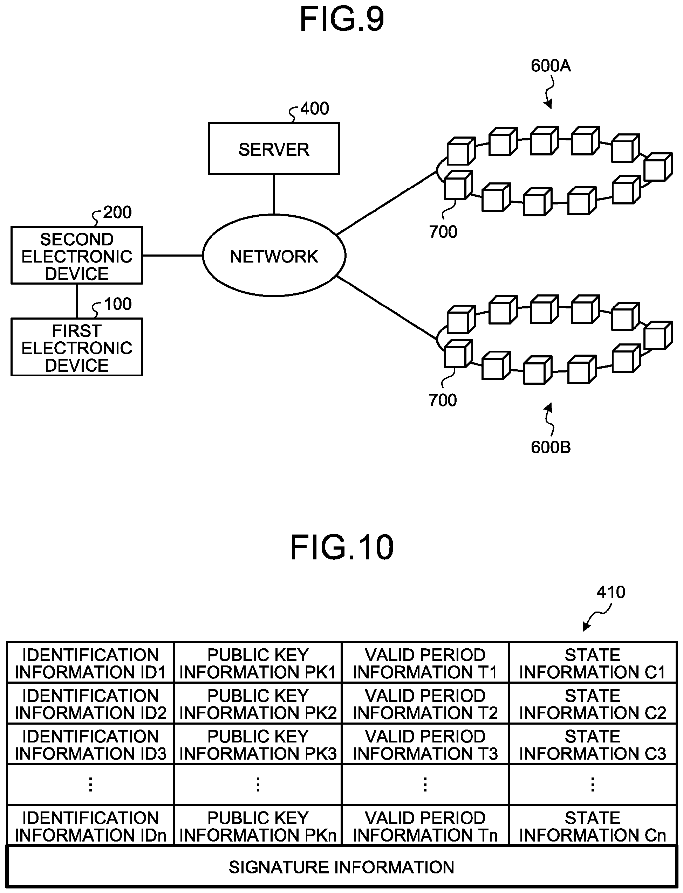

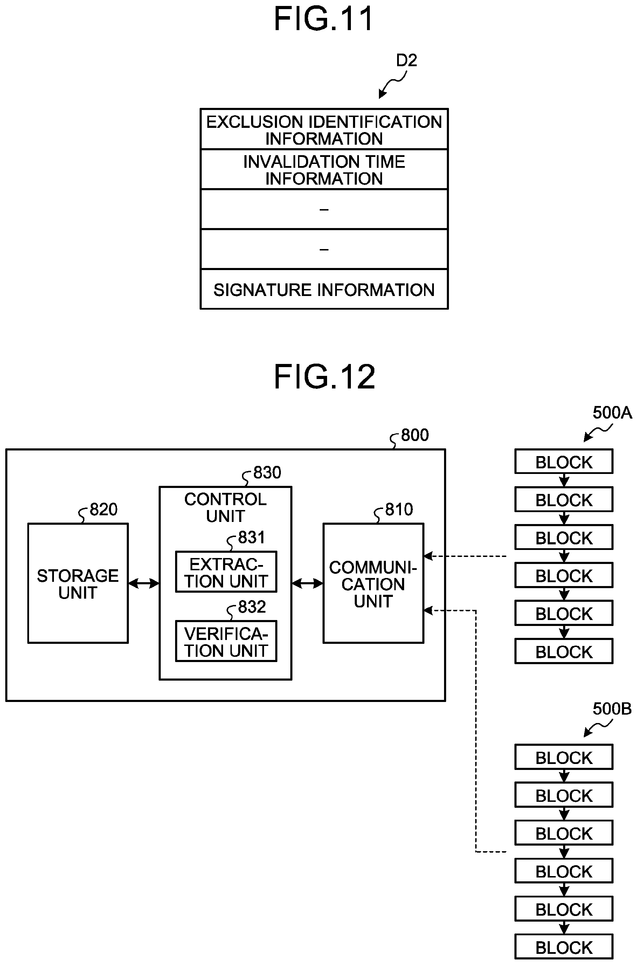

FIG. 9 is a view for describing an example of a server that manages the electronic device according to the first embodiment. FIG. 10 is a view illustrating an example of management data of the server according to the first embodiment. FIG. 11 is a view illustrating an example of transaction data for excluding the electronic device according to the first embodiment.

As illustrated in FIG. 9, a server 400 is a so-called cloud server. The server 400 has a function of managing the first electronic device 100 and the second electronic device 200. The server 400 manages the first electronic device 100 and the second electronic device 200 based on management data 410 illustrated in FIG. 10. The management data 410 includes items such as identification information ID, public key information PK, valid period information T, and state information C, for example. As the identification information ID, for example, pieces of identification information of the first electronic device 100 and the second electronic device 200 are set. As the public key information PK, for example, public key information of an electronic device corresponding to identification information ID is set. As the valid period information T, for example, information indicating a valid period of an electronic device corresponding to identification information ID is set. As the state information C, state information of an electronic device corresponding to identification information ID is set.

The server 400 is configured to be capable of communicating with the second electronic device 200 and the node device 700 via a network. The server 400 has, for example, a function of acquiring information on an abnormality of an electronic device from the second electronic device 200, an administrator, and the like. When detecting an abnormality of an electronic device to be managed, the server 400 sets information indicating the abnormality in the corresponding state information C of the management data 410. The server 400 has a function of providing corresponding information of the management data 410 to an inquiry source in response to an inquiry of an electronic device. The server 400 has a function of requesting the node device 700 to register transaction data including the management data 410 in a blockchain.

The server 400 has a function of detecting an electronic device to be excluded among a plurality of managed electronic devices. The server 400 detects the electronic device to be excluded based on, for example, the valid period information T, the state information C, and the like of the management data 410. Examples of the electronic device to be excluded include an electronic device whose valid period has expired, a faulty electronic device, and an electronic device in a fraudulent state. When detecting the electronic device to be excluded, the server 400 generates transaction data D2 illustrated in FIG. 11 in order to exclude the electronic device. The transaction data D2 includes items such as exclusion identification information, invalidation time information, and signature information. As the item of discharge identification information, for example, identification information of the electronic device to be excluded is set. As the item of the invalidation time information, for example, information indicating time and date, and the like at which invalidation is started is set. The server 400 requests the node device 700 to register the generated transaction data D2 in a blockchain. As a result, the server 400 can cause a device or the like using data of the blockchain to recognize the electronic device to be excluded, which is indicated by the transaction data D2, by registering the transaction data D2 in the blockchain.

### [Configuration Example of Verification Device According to First Embodiment]

FIG. 12 is a diagram illustrating a configuration example of a verification device according to the first embodiment. As illustrated in FIG. 12, a verification device 800 includes a communication unit 810, a storage unit 820, and a control unit 830. The control unit 830 is electrically connected to the communication unit 810 and the storage unit 820. The verification device 800 is used, for example, in a case of using blockchain data. Note that the verification device 800 may be included in the configuration of the information processing system 1 described above.

The communication unit 810 has a function of performing information communication with other communication devices, electronic devices, and the like via a network. Specifically, the communication unit 810 receives blockchain data and outputs the data to the control unit 830. The communication unit 810 transmits various types of information to another communication device under the control of the control unit 830.

The storage unit 820 stores various types of data and programs. For example, the storage unit 820 is a semiconductor memory element such as a random access memory (RAM) and a flash memory, a hard disk, an optical disk, or the like. The storage unit 820 stores data received from another electronic device. The storage unit 820 stores a program for causing the artificial intelligence to function in the verification device 800. The artificial intelligence means, for example, a program for causing a computer to perform what humans do using intelligence, a computer executing the program, or the like. The artificial intelligence can share at least a part of a certain ability involving physical work or intelligent work among a plurality of computers by exchanging data through a network. The storage unit 820 can store a part of the management data 410 acquired from the server 400 described above.

The control unit 830 is, for example, a dedicated or general-purpose computer. The control unit 830 controls an operation of the verification device 800. The control unit 830 provides a function of verifying blockchain data by executing a program. The control unit 830 includes an extraction unit 831 and a verification unit 832. Each functional unit of the extraction unit 831 and the verification unit 832 is realized by, for example, a CPU, an MPU, or the like. Further, each functional unit may be realized by, for example, an integrated circuit such as an ASIC and an FPGA.

The extraction unit 831 extracts target data such as verification target data and data that is desirably used from a blockchain. For example, the extraction unit 831 extracts the transaction data D1 including the target data from the blockchain. The extraction unit 831 stores the extracted target data in the storage unit 820. The extraction unit 831 supplies the extracted target data to the verification unit 832.

The verification unit 832 verifies the target data extracted by the extraction unit 831. For example, the verification unit 832 determines whether a determination time has elapsed since generation of a block including the target data in the blockchain, and sets the target data of the block for which the determination time has elapsed as a verification target. Examples of the determination time include an average time until a block is registered in a blockchain, an average time during which a block is likely to be excluded, and the like. For example, the verification unit 832 acquires the management data 410 or data of a corresponding electronic device from the above-described server 400 or the like. In a case where the above-described transaction data D2 has been registered in a blockchain, the verification unit 832 acquires the transaction data D2. The verification unit 832 confirms an excluded electronic device based on the acquired transaction data D2. For example, in a case where exclusion identification information of the transaction data D2 matches identification information of the extracted transaction data D1 and invalidation time information of the transaction data D2 is satisfied, the verification unit 832 determines that the electronic device is the excluded electronic device. The verification unit 832 invalidates the target data of the transaction data D1 of the excluded electronic device among pieces of acquired target data based on the identification information of the excluded electronic device, and validates the other pieces of target data. The verification unit 832 transmits data indicating a verification result to a set transmission destination via the communication unit 810.

The functional configuration example of the verification device 800 according to the first embodiment has been described above. Note that the above configuration described with reference to FIG. 12 is merely an example, and the functional configuration of the verification device 800 according to the present embodiment is not limited to such an example. The functional configuration of the verification device 800 according to the present embodiment can be flexibly modified in accordance with specifications and operations.

### [Processing Procedure of Verification Device According to First Embodiment]

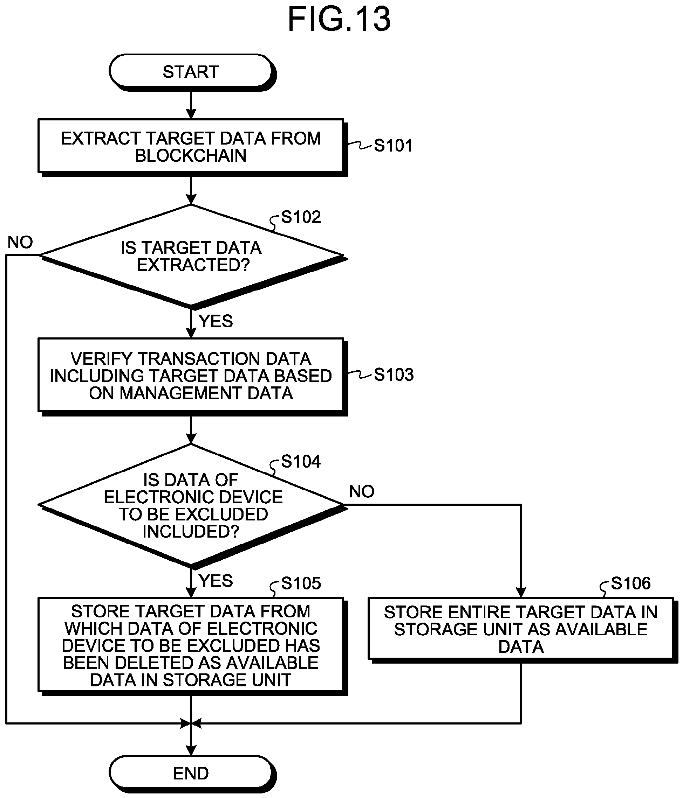

Next, an example of a processing procedure of the verification device 800 according to the first embodiment will be described with reference to FIG. 13. FIG. 13 is a flowchart illustrating the example of the processing procedure executed by the verification device 800 according to the first embodiment. The processing procedure illustrated in FIG. 13 is implemented as the control unit 830 of the verification device 800 executes a program. The processing procedure illustrated in FIG. 13 is repeatedly executed by the control unit 830.

As illustrated in FIG. 13, the control unit 830 of the verification device 800 extracts target data from a blockchain (Step S101). For example, the control unit 830 acquires the target data from the blockchain via the communication unit 810. The control unit 830 determines whether the target data has been extracted (Step S102). When determining that the target data has not been extracted (No in Step S102), the control unit 830 ends the processing procedure illustrated in FIG. 13. Further, when determining that the target data has been extracted (Yes in Step S102), the control unit 830 advances the processing to Step S103.

The control unit 830 verifies the transaction data D1 including the target data based on the management data 410 (Step S103). For example, the control unit 830 verifies the transaction data D1 with reference to the management data 410, the transaction data D2, and the like, and stores a verification result in the storage unit 820. When the process in Step S103 ends, the control unit 830 advances the processing to Step S104.

The control unit 830 determines whether data of an electronic device to be excluded is included (Step S104). For example, the control unit 830 determines whether the data of the electronic device to be excluded is included in the target data based on the verification result. When determining that the data of the electronic device to be excluded is included (Yes in Step S104), the control unit 830 advances the processing to Step S105. The control unit 830 stores target data, from which the data of the electronic device to be excluded has been deleted, in the storage unit 820 as available data (Step S105). Note that, for example, the control unit 830 may be configured to delete the target data and not to store the target data in the storage unit 820. When the process of Step S105 ends, the control unit 830 ends the processing procedure illustrated in FIG. 13.

Further, when determining that the data of the electronic device to be excluded is not included (No in Step S104), the control unit 830 advances the processing to Step S106. The control unit 830 stores all pieces of the target data in the storage unit 820 as available data (Step S106). When the process of Step S106 ends, the control unit 830 ends the processing procedure illustrated in FIG. 13.

In the example of the processing procedure illustrated in FIG. 13, the control unit 830 of the verification device 800 functions as the extraction unit 831 described above by executing the process of Step S110. The control unit 830 functions as the verification unit 832 described above by executing the processes of Step S102 to Step S106.

As described above, the second electronic device 200 according to the first embodiment generates the transaction data D1 including the first data acquired from at least one of the first electronic device 100 and the other second electronic device 200. The second electronic device 200 can identify a blockchain to which registration is to be performed from among a plurality of blockchains based on a type of the transaction data D1. As a result, the second electronic device 200 can cause the transaction data D1 including identification information of an electronic device to be registered in the blockchain suitable for the type, and thus, can ensure authenticity of data to be registered in the plurality of types of blockchains.

For example, the second electronic device 200 can identify a registration destination of the transaction data D1 having no confidentiality as the first blockchain 500A and identify a registration destination of the transaction data D1 having confidentiality as the second blockchain 500B. As a result, the second electronic device 200 can register the transaction data D1 suitable for the blockchain, and thus, it is possible to simplify management of the plurality of types of blockchains.

Further, when acquiring the transaction data D1 to be verified from a blockchain, the verification device 800 can confirm whether an electronic device has been excluded based on identification information and the management data 410 since the identification information is included in the transaction data D1. The verification device 800 can invalidate data of an excluded electronic device and validate data of an electronic device that has not been excluded. As a result, the verification device 800 can verify data at a stage of use even for the data registered in the blockchain, and thus, can contribute to ensuring the validity of the data.

Note that the above-described first embodiment is an example, and various modifications and applications are possible. The information processing system 1 of the first embodiment may be applied to other embodiments and the like. Further, the information processing system 1 may include the first electronic device 100, the second electronic device 200, the server 400, and the verification device 800.

### [Modification (1) of First Embodiment]

For example, it is assumed that the sensor unit 110 of the first electronic device 100 is an image sensor set on a street. In this case, the second electronic device 200 continuously generates transaction data D1 of the host device including the transaction data D1 acquired from the first electronic device 100 and registers the transaction data D1 in a blockchain. As a result, the second electronic device 200 can register data, which can be used for analysis of a location where traffic congestion occurs and analysis of a place where an accident is likely to occur or a factor, for example, in an appropriate blockchain. Further, in a case where a user is reflected in registration data, the blockchain can learn, by machine learning, a place visited by the user, a body type, clothes, a way of walking, and the like. As a learning result of the blockchain is reflected in a movie, a game, or the like, it is possible to give the user an affinity.

As a technique of the machine learning, for example, a neural network or deep learning is used. The neural network is a model imitating a human cranial neural circuit, and includes three types of layers of an input layer, an intermediate layer (hidden layer), and an output layer. Further, the deep learning is a model using the neural network having a multilayer structure, and can learn a complex pattern hidden in a large amount of data by repeating characteristic learning in each layer. The deep learning is used in, for example, an application for identifying an object in an image or a word in a voice.

Further, as hardware that realizes such machine learning, for example, a computer, such as the verification device 800 and the server 400, a neurochip/neuromorphic chip incorporating a concept of the neural network, or the like can be used.

Further, for example, it is assumed that the first electronic device 100 is an electronic device mounted on a vehicle, and the sensor unit 110 is various sensors of the vehicle. In this case, the second electronic device 200 continuously generates transaction data D1 of the host device including the transaction data D1 acquired from the first electronic device 100 and registers the transaction data D1 in a blockchain. As a result, the second electronic device 200 can register, for example, data that can be used to analyze a state, a position, and a driving behavior of the vehicle in an appropriate blockchain.

### [Modification (2) of First Embodiment]

For example, the transaction data D1 may include data belonging to an individual. In a case of data with which an individual can be identified, the second electronic device 200 may cause information for identifying the individual to be included in the transaction data D1 for each data. In this case, the second electronic device 200 identifies the second blockchain 500B of the consortium type as a registration destination of the transaction data D1 including the data with which the individual can be identified. Then, data registered in the blockchain is preferably used as one of data storage destinations of an information bank, for example, by performing personal authentication and performing access control on the data.

### (Second Embodiment)

### [Configuration Example of Information Processing System According to Second Embodiment]

Although the case where data included in the transaction data D1 is verified by the verification device 800 has been described in the first embodiment, but the present invention is not limited thereto. In a second embodiment, an example in which a verification function is incorporated in the second electronic device 200 will be described.

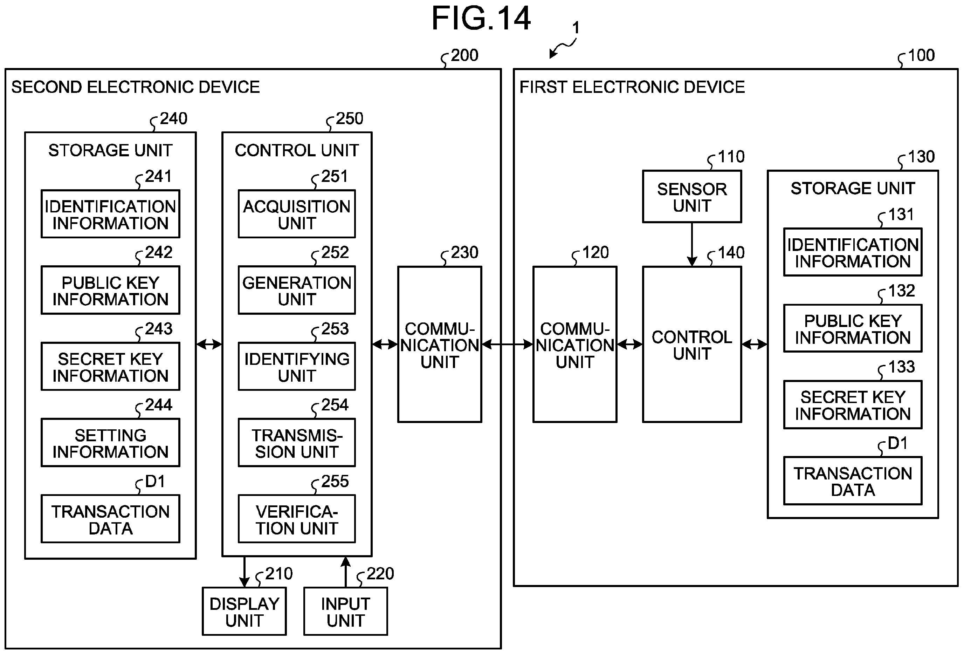

FIG. 14 is a diagram illustrating configuration examples of the first electronic device 100 and the second electronic device 200 according to the second embodiment. As illustrated in FIG. 14, the information processing system 1 includes the first electronic device 100 and the second electronic device 200. The first electronic device 100 has the same configuration as the first electronic device 100 according to the first embodiment.

The second electronic device 200 includes the display unit 210, the input unit 220, the communication unit 230, the storage unit 240, and the control unit 250. Note that a description of the same configuration as that of the second electronic device 200 according to the first embodiment will be omitted.

The control unit 250 controls an operation of the second electronic device 200. The control unit 250 includes the acquisition unit 251, the generation unit 252, the identifying unit 253, the transmission unit 254, and a verification unit 255. That is, the control unit 250 further includes the verification unit 255. The verification unit 255 is realized by, for example, a CPU, an MPU, or the like. The verification unit 255 may be realized by, for example, an integrated circuit such as an ASIC and an FPGA.

The verification unit 255 verifies transaction data D1 acquired by the acquisition unit 251 from the first electronic device 100 or the like. For example, the verification unit 255 acquires the management data 410 from the server 400 or the like described above or acquires exclusion identification information, and stores the management data or the exclusion identification information in the storage unit 240. The verification unit 255 determines whether identification information of the transaction data D1 matches the exclusion identification information. The verification unit 255 sets the transaction data D1 of the first electronic device 100 indicated by the identification information matching the exclusion identification information as an exclusion target. The verification unit 255 supplies information indicating a verification result to the generation unit 252. Note that, when the transaction data D1 of the first electronic device 100 is recognized as an exclusion target, the verification unit 255 may then ignore the transaction data D1 from the first electronic device 100.

The generation unit 252 excludes the transaction data D1 of the first electronic device 100 set as the exclusion target by the verification unit 255, and generate transaction data D1 of the host device not including the corresponding transaction data D1 or does not generate the transaction data D1 of the host device.

### [Processing Procedure of Second Electronic Device According to Second Embodiment]

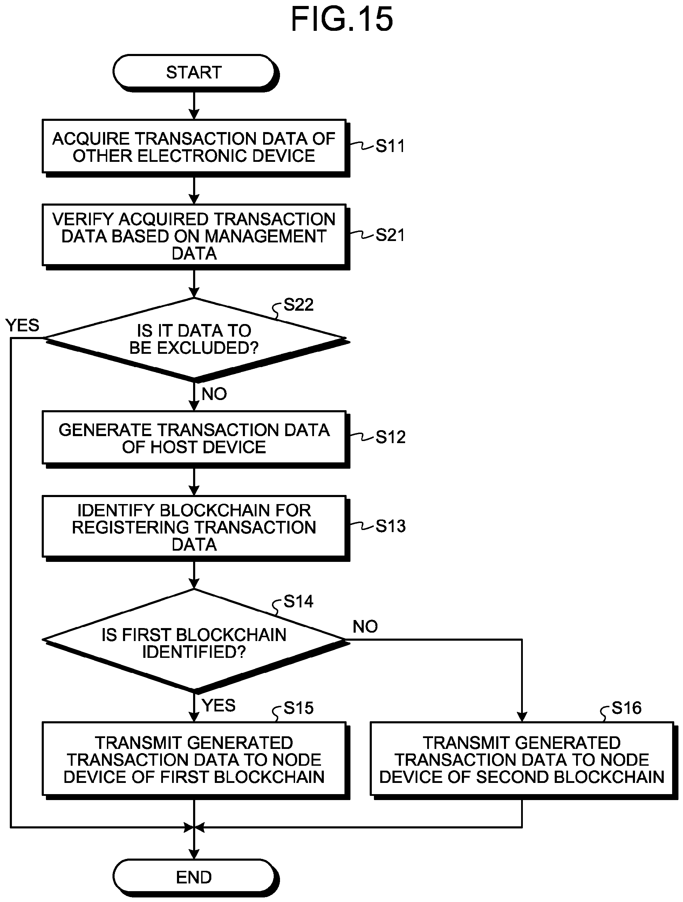

Next, an example of a processing procedure of the second electronic device 200 according to the second embodiment will be described with reference to FIG. 15. FIG. 15 is a flowchart illustrating the example of the processing procedure executed by the second electronic device 200 according to the second embodiment. The processing procedure illustrated in FIG. 15 is implemented as the control unit 250 of the second electronic device 200 executes a program. The processing procedure illustrated in FIG. 15 is repeatedly executed by the control unit 250.

As illustrated in FIG. 15, the control unit 250 of the second electronic device 200 acquires transaction data D1 of another electronic device (Step S11). Then, the control unit 250 verifies the acquired transaction data D1 based on the management data 410 (Step S21). For example, the control unit 250 verifies the transaction data D1 with reference to the management data 410, exclusion identification information, and the like, and stores a verification result in the storage unit 240. When the process in Step S21 ends, the control unit 250 advances the processing to Step S22.

The control unit 250 determines whether transaction data is data to be excluded (Step S22). Examples of the data to be excluded include data from an electronic device set as an exclusion target, transaction data D1 including data of the electronic device as the exclusion target, and the like. Examples of the exclusion target include an electronic device that has been used for years, a faulty electronic device, an electronic device those use is not guaranteed, and the like. For example, when the identification information of the transaction data D1 matches the exclusion identification information, the control unit 250 determines that the corresponding transaction data D1 is the data to be excluded. When determining that the transaction data is the data to be excluded (Yes in Step S22), the control unit 250 ends the processing procedure illustrated in FIG. 15 without generating the transaction data D1 of the host device.

Further, when determining that the transaction data is not the data to be excluded (No in Step S22), the control unit 250 advances the processing to Step S12. The control unit 250 generates transaction data D1 of the host device (Step S12). The control unit 250 identifies a blockchain in which the transaction data D1 is to be registered (Step S13). The control unit 250 determines whether the first blockchain 500A has been identified based on the identification result of Step S13 (Step S14). When determining that the first blockchain 500A has been identified (Yes in Step S14), the control unit 250 advances the processing to Step S15. The control unit 250 transmits the generated transaction data D1 to the node device 700 of the first blockchain 500A (Step S15). Then, when the process of Step S15 ends, the control unit 250 ends the processing procedure illustrated in FIG. 15.

Further, when determining that the first blockchain 500A has not been identified (No in Step S14), the control unit 250 advances the processing to Step S16. The control unit 250 transmits the generated transaction data D1 to the node device 700 of the second blockchain 500B (Step S16). Then, when the process of Step S16 ends, the control unit 250 ends the processing procedure illustrated in FIG. 15.

In the example of the processing procedure illustrated in FIG. 15, the control unit 250 of the second electronic device 200 functions as the acquisition unit 251 described above by executing the process of Step S11. The control unit 250 functions as the generation unit 252 described above by executing the process of Step S12. The control unit 250 functions as the identifying unit 253 described above by executing Step S13. The control unit 250 functions as the transmission unit 254 described above by executing Step S15 and Step S16. The control unit 250 functions as the above-described verification unit 255 by executing Step S21.

As described above, the second electronic device 200 according to the second embodiment verifies data acquired from the first electronic device 100 or the like based on the identification information included in the data. As a result, the second electronic device 200 can generate the transaction data D1 of the host device that does not include data of the faulty first electronic device 100, the first electronic device 100 whose valid period has expired, and the like. As a result, the second electronic device 200 can ensure the authenticity of data to be registered in a block by causing the generated legitimate transaction data D1 to be registered in the blockchain. Therefore, the second electronic device 200 can contribute to improvement of robustness of the blockchain.

Note that the above-described second embodiment is an example, and various modifications and applications are possible. The second electronic device 200 of the second embodiment may be applied to other embodiments and the like.

Further, the second electronic device 200 according to the first embodiment and the second embodiment may thin out or compress data included in the transaction data D1 assuming use of a blockchain. For example, in a case where there is no change in data from the first electronic device 100 within a certain period of time, the second electronic device 200 may compress the data by causing data indicating a time zone in which there is no change to be included in the transaction data D1 without including the data itself. For example, the second electronic device 200 may compress data by statistically processing the data from the first electronic device 100 and causing data indicating a statistical result to be included in the transaction data D1. For example, the second electronic device 200 may compress data by causing a hash value or the like of the data from the first electronic device 100 to be included in the transaction data D1.

### [Hardware Configuration]

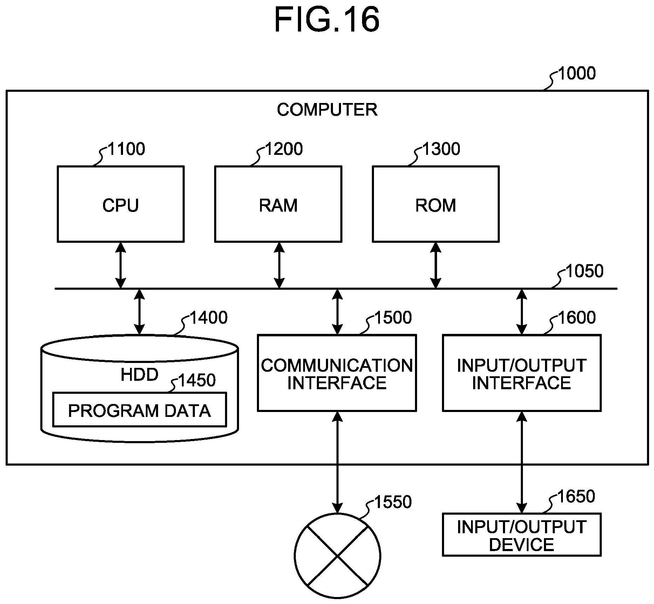

The information processing apparatus, which is the second electronic device 200 according to the present embodiment described above, may be implemented by, for example, a computer 1000 having a configuration as illustrated in FIG. 16. Hereinafter, the second electronic device 200 according to the embodiments will be described as an example. FIG. 16 is a hardware configuration diagram illustrating an example of the computer 1000 that implements functions of the information processing apparatus. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 is operated based on a program stored in the ROM 1300 or the HDD 1400, and controls each unit. For example, the CPU 1100 develops a program stored in the ROM 1300 or the HDD 1400 into the RAM 1200 and executes processes corresponding to various programs.

The ROM 1300 stores a boot program such as a basic input output system (BIOS) executed by the CPU 1100 when the computer 1000 starts up, a program depending on hardware of the computer 1000, and the like.

The HDD 1400 is a computer-readable recording medium that non-temporarily records a program executed by the CPU 1100, data used by the program, and the like. Specifically, the HDD 1400 is a recording medium that records an information processing program according to the present disclosure, which is an example of program data 1450.

The communication interface 1500 is an interface for connecting the computer 1000 to an external network 1550 (for example, the Internet). For example, the CPU 1100 receives data from other devices or transmits data generated by the CPU 1100 to the other devices via the communication interface 1500.

The input/output interface 1600 is an interface for connection between an input/output device 1650 and the computer 1000. For example, the CPU 1100 receives data from an input device such as a keyboard and a mouse via the input/output interface 1600. Further, the CPU 1100 transmits data to an output device such as a display, a speaker, and a printer via the input/output interface 1600. Further, the input/output interface 1600 may function as a media interface for reading a program or the like recorded on predetermined recording media. The media are, for example, optical recording media such as a digital versatile disc (DVD), a magneto-optical recording medium such as a magneto-optical disk (MO), a tape medium, a magnetic recording medium, a semiconductor memory, and the like.

For example, in a case where the computer 1000 functions as the second electronic device 200 according to the embodiments, the CPU 1100 of the computer 1000 executes a program loaded on the RAM 1200 to implement the functions of the acquisition unit 251, the generation unit 252, the identifying unit 253, the transmission unit 254, the verification unit 255, and the like of the control unit 250. Further, the HDD 1400 stores the program according to the present disclosure or data in the storage unit 240. Note that the CPU 1100 reads and executes the program data 1450 from the HDD 1400, but as another example, the CPU 1100 may acquire these programs from other devices via the external network 1550.

Although the preferred embodiments of the present disclosure have been described as above in detail with reference to the accompanying drawings, a technical scope of the present disclosure is not limited to such examples. It is apparent that a person who has ordinary knowledge in the technical field of the present disclosure can find various alterations and modifications within the scope of technical ideas described in the claims, and it should be understood that such alterations and modifications will naturally pertain to the technical scope of the present disclosure.

Further, the effects described in the present specification are merely illustrative or exemplary, and are not restrictive. That is, the technology according to the present disclosure can exhibit other effects that are obvious to those skilled in the art from the description in the present specification, in addition to or instead of the above effects.

Further, it is also possible to create a program for causing hardware, such as a CPU, a ROM, and a RAM built in a computer, to exhibit functions equivalent to the configurations in the second electronic device 200, and a computer-readable recording medium recording the program can also be provided.

Further, the respective steps relating to the processing of the second electronic device 200 in the present specification are not necessarily processed in a time-series manner in the order described in the flowchart. For example, the steps relating to the processing of the second electronic device 200 may be processed in an order different from the order described in the flowchart, or may be processed in parallel.

Further, the case where the information processing apparatus is realized by the second electronic device 200 has been described in the present specification, but the present invention is not limited thereto. The information processing apparatus may be realized by, for example, a communication device, a server, a control unit, or the like.

### (Effects)

The second electronic device 200 includes: the acquisition unit 251 that acquires first data including identification information of the first electronic device 100 or another second electronic device 200 from the electronic device; the generation unit 252 that generates transaction data D1 including the first data; and the identifying unit 253 that identifies a blockchain in which the generated transaction data D1 is to be registered among a plurality of blockchains based on a type of the generated transaction data D1.

As a result, the second electronic device 200 can generate the transaction data D1 including the first data acquired from the electronic device, and identify the blockchain in which registration needs to be performed from among the plurality of blockchains based on the type of the transaction data D1. As a result, the second electronic device 200 can cause the transaction data D1 including identification information of an electronic device to be registered in the blockchain suitable for the type, and thus, can ensure authenticity of data to be registered in the plurality of types of blockchains.

In the second electronic device 200, the plurality of blockchains includes the first blockchain 500A of the public type and the second blockchain 500B of the consortium type. The identifying unit 253 identifies the first blockchain 500A when the generated transaction data D1 is data having no confidentiality, and identifies the second blockchain 500B when the generated transaction data D1 is data having confidentiality.

As a result, the second electronic device 200 can identify a registration destination of the transaction data D1 having no confidentiality as the first blockchain and identify a registration destination of the transaction data D1 having confidentiality as the second blockchain. As a result, the second electronic device 200 can register the transaction data D1 suitable for the blockchain, and thus, it is possible to simplify management of the plurality of types of blockchains.

In the second electronic device 200, the first data includes second data acquired by the electronic device from another electronic device. When the first data includes the second data, the identifying unit 253 identifies the blockchain in which the generated transaction data D1 is to be registered as the second blockchain 500B.

As a result, when the first data includes the second data of another electronic device, the second electronic device 200 can identify a registration destination of the transaction data D1 as the second blockchain 500B having a higher data processing capability than the first blockchain 500A. As a result, the second electronic device 200 can register the transaction data D1 suitable for the processing capability of the blockchain, and thus, a processing load for managing the blockchain can be suppressed.

In the second electronic device 200, the second data is second transaction data including second identification information and second key information of another electronic device.

As a result, the second electronic device 200 can identify the second blockchain 500B having a high data processing capability as the registration destination of the transaction data D1 in which the transaction data D1 of another electronic device has been encapsulated. As a result, the second electronic device 200 can register the transaction data D1 including pieces of data of the plurality of electronic devices in the second blockchain 500B, and thus, a processing load for managing the first blockchain 500A can be suppressed.

In the second electronic device 200, the generation unit 252 generates the transaction data D1 including the identification information associated with device information regarding another electronic device.

As a result, the second electronic device 200 can associate the device information of the electronic device with the identification information of the transaction data D1, and register the transaction data D1 capable of grasping a state of the related electronic device in the blockchain. As a result, the second electronic device 200 can register a mechanism capable of determining the validity of the transaction data D1 in the blockchain by grasping the state of the electronic device related to the data from the identification information of the transaction data D1.

The second electronic device 200 further includes the storage unit 240 that stores identification information of the host device, and the generation unit 252 generates transaction data D1 including the identification information of the host device.

As a result, the second electronic device 200 can generate the transaction data D1 including the identification information of the host device and the identification information of another electronic device. As a result, the second electronic device 200 can register a mechanism capable of grasping a transfer route of the transaction data D1 based on the identification information in the blockchain by causing the identification information of the host device and the identification information of another electronic device to be included in the transaction data D1.

In the second electronic device 200, the storage unit 240 further stores key information of the host device, and the generation unit 252 generates anonymized transaction data D1 based on the first data, and the identification information and the key information of the host device. When the transaction data D1 is anonymized, the identifying unit 253 identifies the blockchain in which this transaction data D1 is to be registered as at least one of the first blockchain 500A and the second blockchain 500B. In a case where the transaction data D1 is not anonymized, the identifying unit 253 identifies the blockchain in which this transaction data D1 is to be registered as the second blockchain 500B.

As a result, the second electronic device 200 can identify a registration destination of the anonymized transaction data D1 as at least one of the first blockchain 500A and the second blockchain 500B, and identify a registration destination of the transaction data D1, which has not been anonymized, as the second blockchain 500B. As a result, the second electronic device 200 can register the transaction data D1 in the blockchain suitable for the transaction data D1, and thus, it is possible to simplify management of a plurality of types of blockchains.

In the second electronic device 200, when the transaction data D1 is data of compression formation or data including a part of the first data, the identifying unit 253 identifies the blockchain in which this transaction data D1 is to be registered as the first blockchain 500A.

As a result, the second electronic device 200 can register the transaction data D1 with the suppressed amount of data in the first blockchain 500A. As a result, the second electronic device 200 can suppress an increase in the processing load of the first blockchain 500A having a lower processing capability than the second blockchain 500B.

In the second electronic device 200, the storage unit 240 includes the setting information 244 indicating the blockchain in which the transaction data D1 is to be registered. The generation unit 252 generates the transaction data D1 including the information indicating the blockchain for registration based on the setting information 244, and the identifying unit 253 identifies the blockchain indicated by the information when the information indicating the blockchain for registration is included in the transaction data.

As a result, the second electronic device 200 can designate the blockchain as a registration destination by causing the transaction data D1 to include the information indicating the blockchain to be registered. As a result, the second electronic device 200 can register the transaction data D1 in an arbitrary blockchain set by the electronic device, and thus, convenience can be improved.

In the second electronic device 200, when there is a discrepancy in the information indicating the blockchain for registration, the identifying unit 253 identifies the blockchain in which the transaction data D1 is to be register based on a preset priority.

As a result, when there is a discrepancy in the information indicating the blockchain for registration, the second electronic device 200 can identify the blockchain as a registration destination of the transaction data D1 based on the priority. As a result, the second electronic device 200 can register the transaction data D1 including pieces of data of the plurality of electronic devices in the blockchain according to the priority, and thus, the transaction data D1 can be effectively used.

The second electronic device 200 further includes the transmission unit 254 that transmits the transaction data D1 to the node device 700 of the blockchain identified by the identifying unit 253.

As a result, the second electronic device 200 can transmit the transaction data D1 to the node device 700 of the blockchain identified by the identifying unit 253. As a result, the second electronic device 200 can register the transaction data D1 suitable for the blockchain in the node device 700, and thus, the authenticity of data registered in the plurality of types of blockchains can be secured.

In the second electronic device 200, the transmission unit 254 transmits the transaction data D1 generated by the generation unit 252 to another electronic device on a transfer route.

As a result, the second electronic device 200 can transmit the transaction data D1 generated by the generation unit 252 to another electronic device on the transfer route as the first data using the transmission unit 254. As a result, the second electronic device 200 can include the transaction data D1 of the host device in the transaction data D1 of another electronic device, and thus, the encapsulated transaction data D1 can be registered in an arbitrary blockchain.

In the second electronic device 200, the transmission unit 254 transmits the transaction data D1 at a timing different from those of other electronic devices.

As a result, the second electronic device 200 can transmit the transaction data D1 generated by the generation unit 252 using the transmission unit 254 at a timing different from those of some or all of the other electronic devices. As a result, the second electronic device 200 can distribute a transmission timing of the transaction data D1 and transmission timings of the other electronic devices, thereby contributing to smooth transmission processing.

The second electronic device 200 further includes the verification unit 255 that verifies the acquired first data, and the generation unit 252 generates the transaction data D1 including the first data verified by the verification unit 255.

As a result, the second electronic device 200 can generate the transaction data D1 including the first data verified by the verification unit 255. As a result, the second electronic device 200 can cause the transaction data D1 based on the verified data to be registered in the blockchain, and thus, it is possible to ensure the authenticity of data to be registered in the block.

In the second electronic device 200, the generation unit 252 generates transaction data including the first data when the verified first data is not data to be excluded, and does not generate the transaction data when the verified first data is the data to be excluded.

As a result, the second electronic device 200 can generate the transaction data D1 including no data to be excluded. As a result, the second electronic device 200 can register the transaction data D1 including no data to be excluded in the blockchain, and thus, it is possible to ensure the authenticity of data to be registered in the block.

An information processing method, executed by a computer, includes: acquiring first data including identification information of an electronic device from the electronic device; generating transaction data D1 including the first data; and identifying a blockchain in which the generated transaction data D1 is to be registered among a plurality of blockchains based on a type of the generated transaction data.

As a result, the information processing method can cause the computer to execute processing of generating the transaction data D1 including the first data acquired from the electronic device and identifying the blockchain for registration from among the plurality of blockchains based on the type of the transaction data D1. As a result, the information processing method can cause the transaction data D1 including identification information of an electronic device to be registered in the blockchain suitable for the type, and thus, can ensure authenticity of data to be registered in the plurality of types of blockchains.

A program is a program for causing a computer to realize: acquiring first data including identification information of an electronic device from the electronic device; generating transaction data D1 including the first data; and identifying a blockchain in which the generated transaction data D1 is to be registered among a plurality of blockchains based on a type of the generated transaction data D1.

As a result, the program can cause the computer to implement processing of generating the transaction data D1 including the first data acquired from the first electronic device 100 and identifying the blockchain for registration from among the plurality of blockchains based on the type of the transaction data D1. As a result, the program can cause the computer to register the transaction data D1 including identification information of an electronic device in the blockchain suitable for the type, and thus, can ensure authenticity of data to be registered in the plurality of types of blockchains.

Note that the following configurations also belong to the technical scope of the present disclosure.
(1) An information processing apparatus comprising:
   an acquisition unit that acquires first data including identification information of an electronic device from the electronic device;
   a generation unit that generates transaction data including the first data; and
   an identifying unit that identifies a blockchain in which the generated transaction data is to be registered among a plurality of blockchains based on a type of the generated transaction data.
(2) The information processing apparatus according to (1), wherein
   the plurality of blockchains includes a first blockchain of a public type and a second blockchain of a consortium type, and
   the identifying unit
   identifies the first blockchain when the generated transaction data is data having no confidentiality and
   identifies the second blockchain when the generated transaction data is data having confidentiality.
(3) The information processing apparatus according to (2), wherein
   the first data includes second data acquired by the electronic device from an other electronic device, and
   the identifying unit identifies the blockchain in which the generated transaction data is to be registered as the second blockchain when the first data includes the second data.
(4) The information processing apparatus according to (3), wherein
   the second data is second transaction data including second identification information and second key information of the other electronic device.
(5) The information processing apparatus according to any one of (1) to (3), wherein
   the generation unit generates the transaction data including the identification information associated with device information regarding the electronic device.
(6) The information processing apparatus according to any one of (1) to (5), further comprising
   a storage unit that stores the identification information of a host device,
   wherein the generation unit generates the transaction data including the identification information of the host device.
(7) The information processing apparatus according to (6), wherein
   the storage unit further stores key information of the host device,
   the generation unit generates the transaction data that has been anonymized based on the first data, and the identification information and the key information of the host device, and
   the identifying unit
   identifies the blockchain in which the transaction data is to be registered as at least one of the first blockchain and the second blockchain when the transaction data is anonymized, and
   identifies the blockchain in which the transaction data is to be registered as the second blockchain when the transaction data is not anonymized.
(8) The information processing apparatus according to (5), wherein
   when the transaction data is data of compression formation or data including a part of the first data, the identifying unit identifies the blockchain in which the transaction data is to be registered as the first blockchain.
(9) The information processing apparatus according to (6), wherein
   the storage unit includes setting information indicating the blockchain in which the transaction data is to be registered,
   the generation unit generates the transaction data including information indicating the blockchain for registration based on the setting information, and
   the identifying unit identifies the blockchain indicated by the information when the information indicating the blockchain for registration is included in the transaction data.
(10) The information processing apparatus according to (9), wherein
   the identifying unit identifies the blockchain in which the transaction data is to be registered based on a preset priority when there is a discrepancy in the information indicating the blockchain for registration.
(11) The information processing apparatus according to any one of (1) to (10), further comprising
   a transmission unit that transmits the transaction data to a node device of the blockchain identified by the identifying unit.
(12) The information processing apparatus according to (11), wherein
   the transmission unit transmits the transaction data generated by the generation unit to another electronic device among the electronic devices on a transfer route.
(13) The information processing apparatus according to (12), wherein
   the transmission unit transmits the transaction data at a timing different from a timing of another electronic device among the electronic devices.
(14) The information processing apparatus according to any one of (1) to (13), further comprising
   a verification unit that verifies the acquired first data,
   wherein the generation unit generates the transaction data including the first data verified by the verification unit.
(15) The information processing apparatus according to (14), wherein
   the generation unit
   generates the transaction data including the first data when the verified first data is not data to be excluded, and
   does not generate the transaction data when the verified first data is the data to be excluded.
(16) An information processing method, executed by a computer, comprising:
   acquiring first data including identification information of an electronic device from the electronic device;
   generating transaction data including the first data; and
   identifying a blockchain in which the generated transaction data is to be registered among a plurality of blockchains based on a type of the generated transaction data.
(17) A program for causing a computer to realize:
   acquiring first data including identification information of an electronic device from the electronic device;
   generating transaction data including the first data; and
   identifying a blockchain in which the generated transaction data is to be registered among a plurality of blockchains based on a type of the generated transaction data.
(18) A verification device including:
   an extraction unit that extracts target data to be verified from a blockchain; and
   a verification unit that compares identification information of an electronic device included in the extracted target data with identification information of an exclusion target, and verifies the target data based on a comparison result.
(19) An information processing system including: a first electronic device that transmits first data including identification information and a second electronic device,
   the second electronic device including:
   an acquisition unit that acquires the first data from the first electronic device;
   a generation unit that generates transaction data including the first data; and
   an identifying unit that identifies a blockchain in which the generated transaction data is to be registered among a plurality of blockchains based on a type of the generated transaction data.

### Reference Signs List

- 1: INFORMATION PROCESSING SYSTEM

- 100: FIRST ELECTRONIC DEVICE
- 110: SENSOR UNIT
- 120: COMMUNICATION UNIT
- 130: STORAGE UNIT
- 131: IDENTIFICATION INFORMATION
- 132: PUBLIC KEY INFORMATION
- 133: SECRET KEY INFORMATION
- 140: CONTROL UNIT
- 200: SECOND ELECTRONIC DEVICE
- 210: DISPLAY UNIT
- 220: INPUT UNIT
- 230: COMMUNICATION UNIT
- 240: STORAGE UNIT
- 241: IDENTIFICATION INFORMATION
- 242: PUBLIC KEY INFORMATION
- 243: SECRET KEY INFORMATION
- 244: SETTING INFORMATION
- 250: CONTROL UNIT
- 251: ACQUISITION UNIT
- 252: GENERATION UNIT
- 253: IDENTIFYING UNIT
- 254: TRANSMISSION UNIT
- 255: VERIFICATION UNIT
- 400: SERVER
- 500A: FIRST BLOCKCHAIN
- 500B: SECOND BLOCKCHAIN
- 600A, 600B: BLOCKCHAIN NETWORK
- 700: NODE DEVICE
- 800: VERIFICATION DEVICE
- D1, D2: TRANSACTION DATA

## Claims

1. An information processing apparatus comprising:
an acquisition unit that acquires first data including identification information of an electronic device from the electronic device;
a generation unit that generates transaction data including the first data; and
an identifying unit that identifies a blockchain in which the generated transaction data is to be registered among a plurality of blockchains based on a type of the generated transaction data.

2. The information processing apparatus according to claim 1, wherein
the plurality of blockchains includes a first blockchain of a public type and a second blockchain of a consortium type, and
the identifying unit
identifies the first blockchain when the generated transaction data is data having no confidentiality and
identifies the second blockchain when the generated transaction data is data having confidentiality.

3. The information processing apparatus according to claim 2, wherein
the first data includes second data acquired by the electronic device from an other electronic device, and
the identifying unit identifies the blockchain in which the generated transaction data is to be registered as the second blockchain when the first data includes the second data.

4. The information processing apparatus according to claim 3, wherein
the second data is second transaction data including second identification information and second key information of the other electronic device.

5. The information processing apparatus according to claim 4, wherein
the generation unit generates the transaction data including the identification information associated with device information regarding the electronic device.

6. The information processing apparatus according to claim 5, further comprising
a storage unit that stores the identification information of a host device,
wherein the generation unit generates the transaction data including the identification information of the host device.

7. The information processing apparatus according to claim 6, wherein
the storage unit further stores key information of the host device,
the generation unit generates the transaction data that has been anonymized based on the first data, and the identification information and the key information of the host device, and
the identifying unit
identifies the blockchain in which the transaction data is to be registered as at least one of the first blockchain and the second blockchain when the transaction data is anonymized, and
identifies the blockchain in which the transaction data is to be registered as the second blockchain when the transaction data is not anonymized.

8. The information processing apparatus according to claim 5, wherein
when the transaction data is data of compression formation or data including a part of the first data, the identifying unit identifies the blockchain in which the transaction data is to be registered as the first blockchain.

9. The information processing apparatus according to claim 6, wherein
the storage unit includes setting information indicating the blockchain in which the transaction data is to be registered,
the generation unit generates the transaction data including information indicating the blockchain for registration based on the setting information, and
the identifying unit identifies the blockchain indicated by the information when the information indicating the blockchain for registration is included in the transaction data.

10. The information processing apparatus according to claim 9, wherein
the identifying unit identifies the blockchain in which the transaction data is to be registered based on a preset priority when there is a discrepancy in the information indicating the blockchain for registration.

11. The information processing apparatus according to claim 5, further comprising
a transmission unit that transmits the transaction data to a node device of the blockchain identified by the identifying unit.

12. The information processing apparatus according to claim 11, wherein
the transmission unit transmits the transaction data generated by the generation unit to another electronic device among the electronic devices on a transfer route.

13. The information processing apparatus according to claim 12, wherein
the transmission unit transmits the transaction data at a timing different from a timing of another electronic device among the electronic devices.

14. The information processing apparatus according to claim 5, further comprising
a verification unit that verifies the acquired first data,
wherein the generation unit generates the transaction data including the first data verified by the verification unit.

15. The information processing apparatus according to claim 14, wherein
the generation unit
generates the transaction data including the first data when the verified first data is not data to be excluded, and
does not generate the transaction data when the verified first data is the data to be excluded.

16. An information processing method, executed by a computer, comprising:
acquiring first data including identification information of an electronic device from the electronic device;
generating transaction data including the first data; and
identifying a blockchain in which the generated transaction data is to be registered among a plurality of blockchains based on a type of the generated transaction data.

17. A program for causing a computer to realize:
acquiring first data including identification information of an electronic device from the electronic device;
generating transaction data including the first data; and
identifying a blockchain in which the generated transaction data is to be registered among a plurality of blockchains based on a type of the generated transaction data.
